(19) **Europäisches Patentamt / European Patent Office / Office européen des brevets**

(11) **EP 2 528 820 B1**

(12) **EUROPEAN PATENT SPECIFICATION**

(45) Date of publication and mention
of the grant of the patent:
**13.01.2016 Bulletin 2016/02**

(51) Int Cl.:
***B64D 39/00*** *(2006.01)*

(21) Application number: **10760141.1**

(86) International application number:
**PCT/US2010/022633**

(22) Date of filing: **29.01.2010**

(87) International publication number:
**WO 2011/093886 (04.08.2011 Gazette 2011/31)**

(54) **A HOIST CABLE MANAGEMENT SYSTEM FOR A REFUELING BOOM**

SYSTEM ZUR REGELUNG DER LÄNGE EINES HUBKABEL FÜR BETANKUNGSAUSLEGER

SYSTEME DE RÉGLAGE D'UN TREUIL POUR PERCHE DE RAVITAILLEMENT EN VOL

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**05.12.2012 Bulletin 2012/49**

(73) Proprietor: **The Boeing Company
Chicago, IL 60606-2016 (US)**

(72) Inventors:
• **SPEER, Thomas, Edward
Des Moines
WA 98198 (US)**

• **HATCHER, Justin, C.
Renton
WA 98058 (US)**
• **MUSGRAVE, Jeffrey, L.
Renton
WA 98058 (US)**

(74) Representative: **Witte, Weller & Partner
Patentanwälte mbB
Postfach 10 54 62
70047 Stuttgart (DE)**

(56) References cited:
**WO-A1-2010/059155       GB-A- 724 092
US-A1- 2003 218 097     US-A1- 2009 292 406
US-B1- 6 288 380        US-B1- 6 966 525**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND INFORMATION**

**Field:**

The present disclosure relates generally to aircraft and, in particular, to refueling aircraft. Still more particularly, the present disclosure relates to a method and apparatus for managing a cable for a refueling boom of a refueling aircraft.

**Background:**

Aerial refueling may be a process of transferring fuel from one aircraft to another aircraft. The aircraft from which the fuel originates may be referred to as a tanker aircraft. The aircraft receiving the fuel may be referred to as a receiver aircraft. This type of process may be applied to various types of aircraft as receiver and/or tanker including, for example, without limitation, fixed wing aircraft, rotor wing aircraft, and/or other suitable types of aircraft.

One common approach for refueling may involve a boom and receptacle system. With a boom, a fixed tube and a telescoping tube may be present on the tanker aircraft. These tubes may also be referred to as a refueling boom or a telescoping refueling boom.

The refueling boom may be attached to the rear of the tanker aircraft and may move along three axes relative to the tanker. The refueling boom also may be a flexible refueling boom. An operator may extend and/or position the refueling boom for insertion into a receptacle on the receiving aircraft to transfer fuel to the receiving aircraft.

Currently, refueling booms used for tanker aircraft may need to be raised and/or lowered while in flight or on the ground. For example, without limitation, when a tanker aircraft is on the ground, a refueling boom may be lowered from a stowed position to a deployed position for maintenance operations. In another example, a refueling boom may be raised from a deployed position to a stowed position while the tanker aircraft is in flight. The raising and/or lowering of a refueling boom may be performed using a hoist cable system.

With currently used hoist cable systems, a hoist cable may be attached to a refueling boom. The hoist cable may be stored in the fuselage of the tanker aircraft using a storage device. This storage may be, for example, without limitation, a spool, a reel, a drum, and/or some other suitable type of storage system. The hoist cable may be deployed from and/or retracted into the storage device using a hoist unit, such as a hydraulic hoist actuator or pulley system.

In document US 2003/0218097 A1 is shown a boom deploy actuator with improved maintainability and simplicity has an electric motor and control circuitry for selectively powering the motor to develop torque with either rotational direction for rotating a capstan to vary the length of a boom cord extending from the capstan to a boom. In a preferred embodiment, the motor is a brushless electric motor. The control circuitry preferably includes circuit components for limiting the speed of the motor.

Further, in document US 6,288,380 B1 is shown an adaptive body bending estimator comprises a band pass filter which receives an accelerometer signal from a missile's accelerometer. The band pass filter, which has a bandpass of 25-70 hertz, rejects frequencies which are not of interest. The band-passed signal is then supplied to a notch filter bank comprising six notch filters within a frequency range of between 42 hertz and 55 hertz. The six notch filters are centered at different frequencies, the frequencies being 42 Hz, 44.32 Hz, 46.78 Hz, 49.37 Hz, 52.11 Hz and 55.00 Hz. The notch filters reject signals at these frequencies. The signals from the filter bank are supplied to an absolute value generator which generates an absolute value for each signal. The absolute value of each signal is passed through a low pass filter bank. The low pass filter bank processes these absolute value signals providing a time weighted average for each signal. The low pass filter bank provides its output signals to a find frequency module. The find frequency module weights each signal from low pass filter bank by its corresponding notch filter center frequency and then takes an average to determine an estimated frequency at which undesirable coupling of missile structural vibrations through the missile's autopilot will occur. The estimated frequency is then supplied to the missile's autopilot which selects an internal notch filter coefficient to reject this frequency.

Furthermore, in document US 6,966,525 B1 is shown an in-flight refueling system, alignment system, and method are provided for substantially automating the positioning and engagement of an in-flight refueling system carried by a first aircraft with respect to a refueling receptacle carried by a second aircraft so as to facilitate an in-flight refueling operation between the first and the second aircraft. More specifically, the present invention provides for the alignment of the in-flight refueling boom with the refueling receptacle such that an extendable nozzle may extend from the in-flight refueling boom and engage the refueling receptacle to initiate an in-flight refueling operation.

When in flight, the length of the hoist cable may need to be managed. The length may be set such that the hoist cable does not interfere with the refueling boom or the aircraft. For example, without limitation, if the hoist cable is too long, the hoist cable may move and may hit the refueling boom and/or fuselage of the tanker aircraft during flight. Further, during flight, the refueling boom may experience movement at certain airspeeds or with certain flight conditions.

If the hoist cable is too short, the hoist cable may restrict this movement. This restriction may cause undesired effects to the components of the refueling boom and/or fuselage.

Therefore, it would be desirable to have a method and apparatus that may overcome one or more of the issues described above, as well as other possible issues.

## SUMMARY

According to the invention, there is provided a method according to claim 1 and an apparatus according to claim 9.

A method is present for managing a hoist cable for a refueling boom for an aircraft. A position of the refueling boom for the aircraft is identified. A desired length for the hoist cable is identified using the position of the refueling boom in response to identifying the position of the refueling boom. A command to change a current length of the hoist cable to substantially the desired length may be generated.

Position information are received from a number of sensors in which the number of sensors comprises at least one of a position sensor system, an inertial measurement unit, a force sensor, and an air data system. At least one of an elevation angle for the refueling boom, an azimuth angle for the refueling boom, and a constant elevation angle may be identified to identify a position of the refueling boom for the aircraft. The constant elevation angle may be an elevation angle for the refueling boom in a stowed position. A desired length for the hoist cable may be identified in response to identifying the position of the refueling boom using the position of the refueling boom, a distance between a location where the hoist cable exits a fuselage of the aircraft and a first attachment point for the hoist cable on the refueling boom, and an additional length using the following:

$$\text{distance} = D * \text{sqrt}(\ 2-2*\cos(\text{elev})*\cos(\text{azim})*\cos(\text{phi})-2*\sin(\text{phi})*\sin(\text{elev})),$$

in which D may be a measured distance between the second attachment point of the refueling boom to the fuselage and the first attachment point for the hoist cable on the refueling boom; sqrt may be a square root; elev may be an elevation angle for the refueling boom; azim may be an azimuth angle for the refueling boom; and phi may be a constant elevation angle for the refueling boom in a stowed position. The desired length of the hoist cable may be selected from a group comprising a length of the hoist cable between the location where the hoist cable exits the fuselage of the aircraft and the attachment point for the hoist cable on the refueling boom, and a length of the hoist cable between where the hoist cable is fed from a storage inside the fuselage and the attachment point for the hoist cable on the refueling boom. The desired length identified to reduce noise in a command generated to change a current length of the hoist cable to substantially the desired length may be filtered using a second order low pass filter. The command to change the current length of the hoist cable to substantially the desired length may be generated.

An apparatus comprises a storage device, program code stored on the storage device, and a processor unit connected to the storage device. The processor unit is configured to run the program code to identify a position of a refueling boom for an aircraft; identify a desired length for a hoist cable in response to identifying the position of the refueling boom; and generate a command to change a current length of the hoist cable to substantially the desired length.

In still yet another advantageous embodiment, an aircraft may comprise a refueling system comprising a refueling boom, a storage device, program code stored on the storage device in which the program code is for control laws, a processor unit connected to the storage device, a number of sensors, a cable storage device, and an actuator unit. The processor unit may be configured to run the program code to identify a position of a refueling boom for an aircraft; identify a desired length for a hoist cable in response to identifying the position of the refueling boom; and generate a command to change a current length of the hoist cable to substantially the desired length. The number of sensors may be configured to sense the position of the refueling boom. The number of sensors may be configured to sense at least one of an elevation angle, an azimuth angle, and a boom length for the refueling boom. The number of sensors may comprise at least one of a position sensor system, an inertial measurement unit, a force sensor, and an air data system. The cable storage device may be configured to store the hoist cable. The actuator unit may be configured to deploy and retract the hoist cable in the cable storage device. The actuator unit may comprise at least one of an electromechanical actuator and a hydraulic actuator.

In a method for managing a hoist cable for a refueling boom for an aircraft, the method including identifying a position of the refueling boom for the aircraft; responsive to identifying the position of the refueling boom, identifying a desired length for the hoist cable using the position of the refueling boom; and generating a command to change a current length of the hoist cable to substantially the desired length.

Advantageously, the step of identifying the desired length for the hoist cable includes identifying the desired length using a distance between a location where the hoist cable exits a fuselage of the aircraft and an attachment point for the hoist cable on the refueling boom.

Advantageously, the step of identifying the desired length using the distance between the location where the hoist cable exits the fuselage of the aircraft and the attachment point for the hoist cable on the refueling boom includes identifying the desired length using the distance between the location where the hoist cable exits the fuselage of the aircraft and the attachment point for the hoist cable on the refueling boom and an additional length.

Advantageously, the attachment point is a first attachment point and wherein the step of identifying the desired length using the distance between the location where the hoist cable exits the fuselage of the aircraft and the attachment point for the hoist cable on the refueling boom includes identifying the desired length using the distance between the location where the hoist cable exits the fuselage of the aircraft and the first attachment point for the hoist cable on the refueling boom using the following:

$$distance = D * sqrt(\ 2-2*cos(elev)*cos(azim)*cos(phi)-2*sin(phi)*sin(elev)),$$

wherein D is a measured distance between a second attachment point of the refueling boom to the fuselage and the first attachment point for the hoist cable on the refueling boom; sqrt is a square root; elev is an elevation angle for the refueling boom; azim is an azimuth angle for the refueling boom; and phi is a constant elevation angle for the refueling boom in a stowed position.

Advantageously, the desired length of the hoist cable is selected from a group comprising a length of the hoist cable between a location where the hoist cable exits a fuselage of the aircraft and an attachment point for the hoist cable on the refueling boom and the length of the hoist cable between where the hoist cable is fed from a storage inside the fuselage and the attachment point for the hoist cable on the refueling boom.

Advantageously, the step of generating the command to change the current length of the hoist cable to substantially the desired length includes filtering the desired length identified to reduce noise in the command generated to change the current length of the hoist cable to substantially the desired length.

Advantageously, the step of filtering the desired length identified to reduce the noise in the command generated to change the current length of the hoist cable to substantially the desired length includes filtering the desired length identified to reduce the noise in the command generated to change the current length of the hoist cable to substantially the desired length using a second order low pass filter.

Advantageously, the step of identifying the position of the refueling boom for the aircraft includes identifying at least one of an elevation angle for the refueling boom, an azimuth angle for the refueling boom, and a constant elevation angle, wherein the constant elevation angle is the elevation angle for the refueling boom in a stowed position.

Advantageously, the step of identifying the position of the refueling boom for the aircraft includes receiving position information from a number of sensors.

Advantageously, the number of sensors comprises at least one of a position sensor system, an inertial measurement unit, a force sensor, and an air data system.

Advantageously, the position of the refueling boom is an angular position.

Further, there may be provided a method for managing a hoist cable for a refueling boom for an aircraft, the method comprising:

receiving position information from a number of sensors in which the number of sensors comprises at least one of a position sensor system, an inertial measurement unit, a force sensor, and an air data system;
identifying at least one of an elevation angle for the refueling boom, an azimuth angle for the refueling boom, and a constant elevation angle in which the constant elevation angle is the elevation angle for the refueling boom in a stowed position to identify a position of the refueling boom for the aircraft;
responsive to identifying the position of the refueling boom, identifying a desired length for the hoist cable using the position of the refueling boom, a distance between a location where the hoist cable exits a fuselage of the aircraft and a first attachment point for the hoist cable on the refueling boom, and an additional length using the following:

$$distance = D * sqrt(\ 2-2*cos(elev)*cos(azim)*cos(phi)-2*sin(phi)*sin(elev)),$$

in which D is a measured distance between a second attachment point of the refueling boom to the fuselage and the first attachment point for the hoist cable on the refueling boom; sqrt is a square root; elev is the elevation angle for the refueling boom, azim is the azimuth angle for the refueling boom, and phi is the constant elevation angle for the refueling boom in the stowed position and in which the desired length of the hoist cable is selected from a group comprising a length of the hoist cable between the location where the hoist cable exits the fuselage of the aircraft and an attachment point for the hoist cable on the refueling boom and the length of the hoist cable between where the hoist cable is fed from a storage inside the fuselage and the attachment point for the hoist cable on the refueling boom;

filtering the desired length identified to reduce noise in a command generated to change a current length of the hoist cable to substantially the desired length using a second order low pass filter; and

generating the command to change the current length of the hoist cable to substantially the desired length.

Furthermore, there is provided an apparatus comprising:

a storage device; program code stored on the storage device; and

a processor unit connected to the storage device and configured to run the program code to identify a position of a refueling boom for an aircraft; identify a desired length for a hoist cable in response to identifying the position of the refueling boom; and generate a command to change a current length of the hoist cable to substantially the desired length.

Advantageously, the apparatus further comprises
a number of sensors configured to sense the position of the refueling boom.

Advantageously, the number of sensors is configured to sense at least one of an elevation angle, an azimuth angle, a constant elevation angle, and a boom length for the refueling boom.

Advantageously, the number of sensors comprises at least one of a position sensor system, an inertial measurement unit, a force sensor, and an air data system.

Advantageously, the program code is for control laws.

Advantageously, the apparatus further comprises
the aircraft; and
the refueling system comprising the refueling boom.

Advantageously, the apparatus further comprises
a cable storage device configured to store the hoist cable; and
a hoist unit configured to deploy and retract the hoist cable in the cable storage device.

Advantageously, the hoist unit is an actuator unit.

Advantageously, the actuator unit comprises at least one of an electromechanical actuator and a hydraulic actuator.

Furthermore, there is provided an aircraft comprising:

a refueling system comprising a refueling boom;

a storage device;

program code stored on the storage device in which the program code is for control laws;

a processor unit connected to the storage device and configured to run the program code to identify a position of the refueling boom for an aircraft; identify a desired length for a hoist cable in response to identifying the position of the refueling boom; and generate a command to change a current length of the hoist cable to substantially the desired length;

a number of sensors configured to sense the position of the refueling boom in which the number of sensors is configured to sense at least one of an elevation angle, an azimuth angle, and a boom length for the refueling boom and in which the number of sensors comprises at least one of a position sensor system, an inertial measurement unit, a force sensor, and an air data system;

a cable storage device configured to store the hoist cable; and

an actuator unit configured to deploy and retract the hoist cable in the cable storage device in which the actuator unit comprises at least one of an electromechanical actuator and a hydraulic actuator.

The features, functions, and advantages can be achieved independently in various embodiments of the present disclosure or may be combined in yet other embodiments in which further details can be seen with reference to the following description and drawings.

## BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:

**Figure 1** is an illustration of an aircraft in which an advantageous embodiment may be implemented;

**Figure 2** is an illustration of a data processing system in accordance with an advantageous embodiment;

**Figure 3** is an illustration of a refueling environment in accordance with an advantageous embodiment;

**Figure 4** is an illustration of one implementation for a refueling environment in accordance with an advantageous embodiment;

**Figure 5** is a more detailed illustration of a refueling boom in accordance with an advantageous embodiment;

**Figure 6** is an illustration of a hoist cable system in accordance with an advantageous embodiment;

**Figure 7** is an illustration of a drum and an actuator unit in accordance with an advantageous embodiment;

**Figure 8** is an illustration of a control law for managing a length of a hoist cable in accordance with an advantageous embodiment;

**Figure 9** is an illustration of a flowchart of a process for managing a hoist cable for a refueling boom in accordance with an advantageous embodiment; and

**Figure 10** is an illustration of a flowchart of a process for managing a hoist cable for a refueling boom in accordance with an advantageous embodiment.

## DETAILED DESCRIPTION

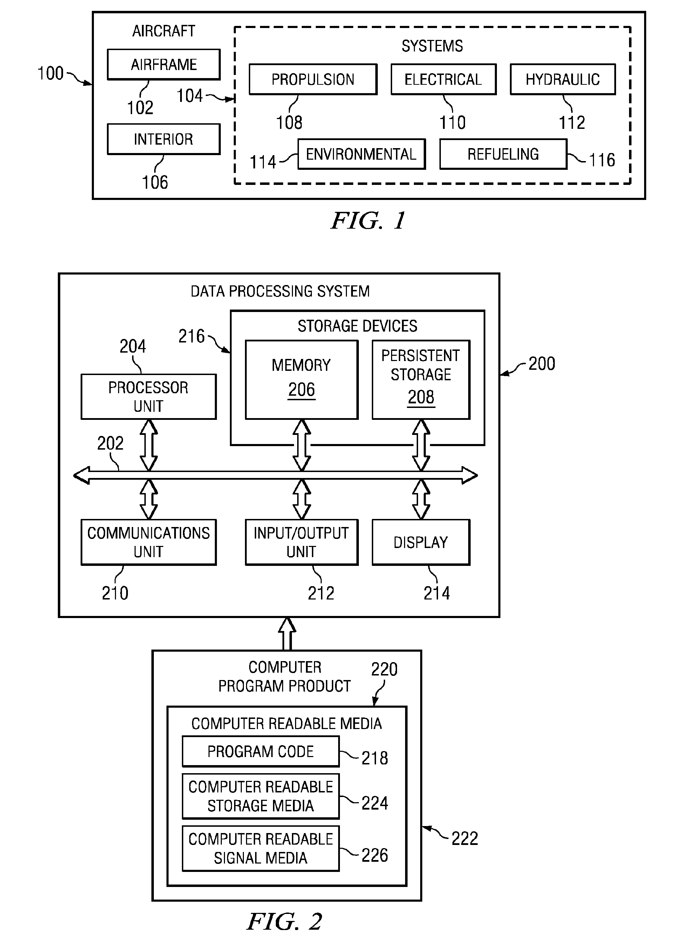

Referring more particularly to the drawings, embodiments of the disclosure may be described in the context of an aircraft, such as, for example, aircraft **100** as shown in **Figure 1.**

Turning now to **Figure 1,** an illustration of an aircraft is depicted in which an advantageous embodiment may be implemented. In this example, aircraft **100** in **Figure 1** may include airframe **102** with a plurality of systems **104** and interior **106.** Examples of systems **104** may include one or more of propulsion system **108,** electrical system **110,** hydraulic system **112,** environmental system **114,** and refueling system **116.** Any number of other systems may be included. Different advantageous embodiments may be implemented within refueling system **116** in these depicted examples.

Turning now to **Figure 2,** an illustration of a data processing system is depicted in accordance with an advantageous embodiment. In this illustrative example, data processing system **200** includes communications fabric **202,** which provides communications between processor unit **204,** memory **206,** persistent storage **208,** communications unit **210,** input/output (I/O) unit **212,** and display **214.** Data processing system **200** may be used to implement or run program code for refueling system **116** in **Figure 1.** Data processing system **200** may be part of refueling system **116** in **Figure 1.** For example, without limitation, data processing system **200** may be used to implement processes to manage a length of a hoist cable within refueling system **116** in **Figure 1.**

Processor unit **204** serves to execute instructions for software that may be loaded into memory **206.** Processor unit **204** may be a set of one or more processors or may be a multi-processor core, depending on the particular implementation. Further, processor unit **204** may be implemented using one or more heterogeneous processor systems in which a main processor is present with secondary processors on a single chip. As another illustrative example, processor unit **204** may be a symmetric multi-processor system containing multiple processors of the same type.

Memory **206** and persistent storage **208** may be examples of storage devices **216.** A storage device is any piece of hardware that is capable of storing information, such as, for example, without limitation, data, program code in functional form, and/or other suitable information either on a temporary basis and/or a permanent basis. Memory **206,** in these examples, may be, for example, a random access memory or any other suitable volatile or nonvolatile storage device. Persistent storage **208** may take various forms, depending on the particular implementation. For example, persistent storage **208** may contain one or more components or devices. For example, persistent storage **208** may be a hard drive, a flash memory, a rewritable optical disk, a rewritable magnetic tape, or some combination of the above. The media used by persistent storage **208** may be removable. For example, a removable hard drive may be used for persistent storage **208.**

Communications unit **210,** in these examples, may provide for communication with other data processing systems or devices. In these examples, communications unit **210** may be a network interface card. Communications unit **210** may provide communications through the use of either or both physical and wireless communications links.

Input/output unit **212** may allow for the input and output of data with other devices that may be connected to data processing system **200.** For example, input/output unit **212** may provide a connection for user input through a keyboard, a mouse, and/or some other suitable input device. Further, input/output unit **212** may send output to a printer. Display **214** may provide a mechanism to display information to a user.

Instructions for the operating system, applications, and/or programs may be located in storage devices **216,** which may be in communication with processor unit **204** through communications fabric **202.** In these illustrative examples, the instructions may be in a functional form on persistent storage **208.** These instructions may be loaded into memory **206** for execution by processor unit **204.** The processes of the different embodiments may be performed by processor unit **204** using computer implemented instructions, which may be located in a memory, such as memory **206.**

These instructions may be referred to as program code, computer usable program code, or computer readable program code that may be read and executed by a processor in processor unit **204.** The program code, in the different embodiments, may be embodied on different physical or computer readable storage media, such as memory **206** or persistent storage **208.**

Program code **218** may be located in a functional form on computer readable media **220** that may be selectively removable and may be loaded onto or transferred to data processing system **200** for execution by processor unit **204.** Program code **218** and computer readable media **220** form computer program product **222.** In one example, computer readable media **220** may be computer readable storage media **224** or computer readable signal media **226.** Computer readable storage media **224** may include, for example, an optical or magnetic disk that is inserted or placed into a drive or other device that is part of persistent storage **208** for transfer onto a storage device, such as a hard drive, that is part of persistent storage **208.** Computer readable storage media **224** also may take the form of a persistent storage, such as a hard drive, a thumb drive, or a flash memory that is connected to data processing system **200.** In some instances, computer readable storage media **224** may not be removable from data processing system **200.**

Alternatively, program code **218** may be transferred to data processing system **200** using computer readable signal media **226.** Computer readable signal media **226** may be, for example, a propagated data signal containing program code **218.** For example, computer readable signal media **226** may be an electromagnetic signal, an optical signal, and/or any other suitable type of signal. These signals may be transmitted over communications links, such as wireless communications links, an optical fiber cable, a coaxial cable, a wire, and/or any other suitable type of communications link. In other words, the communications link and/or the connection may be physical or wireless in the illustrative examples.

In some advantageous embodiments, program code **218** may be downloaded over a network to persistent storage **208** from another device or data processing system through computer readable signal media **226** for use within data processing system **200.** For instance, program code stored in a computer readable storage media in a server data processing system may be downloaded over a network from the server to data processing system **200.** The data processing system providing program code **218** may be a server computer, a client computer, or some other device capable of storing and transmitting program code **218.**

The different components illustrated for data processing system **200** are not meant to provide architectural limitations to the manner in which different embodiments may be implemented. The different advantageous embodiments may be implemented in a data processing system including components in addition to or in place of those illustrated for data processing system **200.** Other components shown in **Figure 2** may be varied from the illustrative examples shown. The different embodiments may be implemented using any hardware device or system capable of executing program code. As one example, data processing system **200** may include organic components integrated with inorganic components and/or may be comprised entirely of organic components excluding a human being. For example, a storage device may be comprised of an organic semiconductor.

As another example, a storage device in data processing system **200** is any hardware apparatus that may store data. Memory **206,** persistent storage **208,** and computer readable media **220** may be examples of storage devices in a tangible form.

In another example, a bus system may be used to implement communications fabric **202** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **206** or a cache such as found in an interface and memory controller hub that may be present in communications fabric **202.**

The different advantageous embodiments recognize and take into account a number of different considerations. For example, without limitation, the different advantageous embodiments recognize and take into account that the amount of movement that a refueling boom may have during flight may be based on the length of the hoist cable attached to the refueling boom. With currently used hoist cable systems, the length of the hoist cable may be managed based on the tension in the hoist. The different advantageous embodiments recognize and take into account that this type of management of the length of the hoist cable may use more hardware components, sensors, software, and/or other components than desired.

Further, the different advantageous embodiments recognize and take into account that the hoist cable may experience forces from the movement of air past the aircraft during flight. With systems that manage the length of the hoist cable based on tension, these forces may lead to varying lengths for the hoist cable at different airspeeds. For example, without limitation, the hoist cable may be longer than desired at higher airspeeds and shorter than desired at lower airspeeds.

When the length of the hoist cable is too long, the hoist cable may hit the fuselage of the aircraft and or the refueling boom during flight. When the length of the hoist cable is too short, the movement of the refueling boom during flight may be restricted. The different advantageous embodiments also recognize and take into account that these variances in length for the hoist cable during flight may not allow the hoist cable to follow the position of the refueling boom as desired.

Thus, the different advantageous embodiments provide a method and apparatus for managing a hoist cable for a refueling boom for an aircraft. A position of the refueling boom for the aircraft may be identified. A desired length for the hoist cable may be identified using the position of the refueling boom in response to identifying the position of the refueling boom. Thereafter, a command may be generated to change a current length of the hoist cable to substantially the desired length.

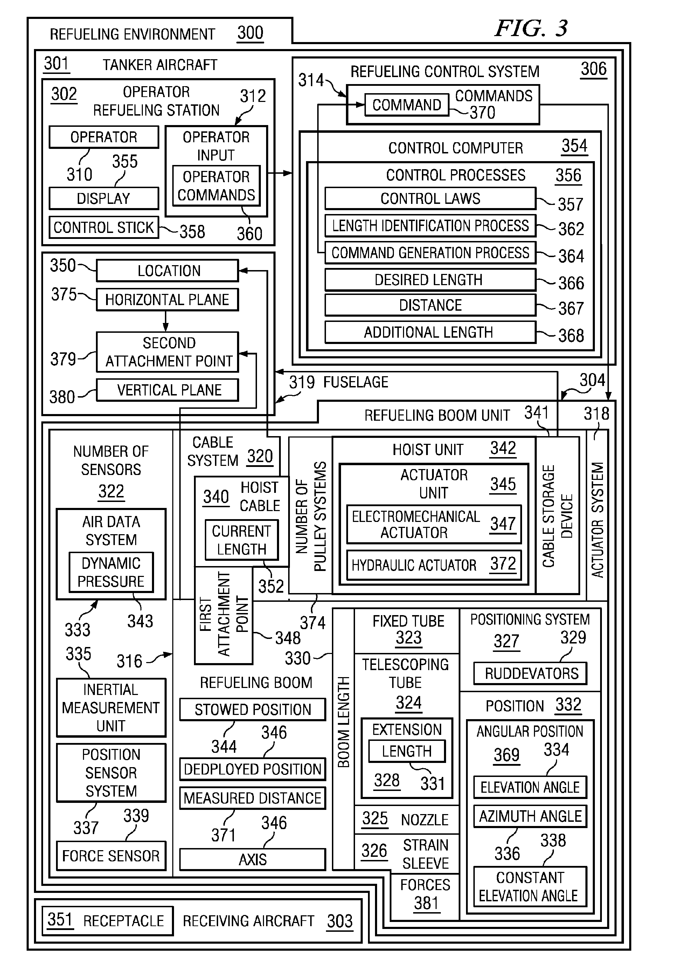

With reference now to **Figure 3,** an illustration of a refueling environment is depicted in accordance with an advantageous embodiment. In this example, refueling environment **300** may be implemented for tanker aircraft **301.** Tanker aircraft **301** may be one example of aircraft **100** in **Figure 1.** Refueling environment **300** may also include receiving aircraft **303.**

Tanker aircraft **301** may include operator refueling station **302,** refueling boom unit **304,** refueling control system **306,** and/or other suitable components. In these illustrative examples, operator refueling station **302,** refueling boom unit **304,** and refueling control system **306** may be part of refueling system **116** in **Figure 1.** These different components may be implemented using one or more data processing systems, such as, for example, data processing system **200** in **Figure 2.**

Operator refueling station **302** may provide a location for operator **310** to control refueling boom unit **304.** Operator refueling station **302** may send operator input **312** to refueling control system **306.** In turn, refueling control system **306** may generate commands **314,** which may be sent to refueling boom unit **304** to control refueling boom **316.** For example, without limitation, commands **314** may be sent to refueling boom unit **304** to move refueling boom **316.**

In these illustrative examples, refueling boom unit **304** may include refueling boom **316,** actuator system **318,** cable system **320,** and number of sensors **322.** Refueling boom **316** may be attached to fuselage **319** at second attachment point **379** on fuselage **319.** As depicted, refueling boom **316** may have fixed tube **323,** telescoping tube **324,** nozzle **325,** strain sleeve **326,** and positioning system **327.** Strain sleeve **326** may be attached to nozzle **325** in these examples. Nozzle **325** may be used to transfer fuel from tanker aircraft **301** to receptacle **351** of receiving aircraft **303.**

Telescoping tube **324** may move with respect to fixed tube **323** to provide extension **328** for telescoping tube **324** in refueling boom **316.** Extension **328** for telescoping tube **324** may be controlled by actuator system **318** in these illustrative examples. Extension **328** of telescoping tube **324** may change. When extension **328** changes, boom length **330** of refueling boom **316** may change. Boom length **330** may change by changing extension **328** in a manner that may reduce boom length **330** or increase boom length **330.** In these illustrative examples, boom length **330** may be the length of fixed tube **323** plus the length of telescoping tube **324,** nozzle **325,** and strain sleeve **326.**

Positioning system **327** of refueling boom **316** may take the form of ruddevators **329** in these illustrative examples. In other advantageous embodiments, positioning system **327** may take the form of some other suitable type of force generator unit. Actuator system **318** may control ruddevators **329** in positioning system **327** to move refueling boom **316.** Refueling boom **316** may be moved with respect to tanker aircraft **301** to which refueling boom unit **304** is attached. In particular, actuator system **318** may move refueling boom **316** to change position **332** of refueling boom **316.** In these depicted examples, position **332** may be angular position **369.**

In these illustrative examples, position **332** may be comprised of at least one of elevation angle **334,** azimuth angle **336,** and constant elevation angle **338.** As depicted, elevation angle **334** may be measured from axis **373** through refueling boom **316** to horizontal plane **375** through second attachment point **379.** Horizontal plane **375** may be a plane parallel to the horizontal plane of fuselage **319.** Azimuth angle **336** may be measured from axis **373** through refueling boom **316** to vertical plane **380.** Vertical plane **380** may be a plane normal to horizontal plane **375** of fuselage **319.** Constant elevation angle **338** may be measured from horizontal plane **375** through second attachment point **379** to axis **373** through refueling boom **316** when refueling boom **316** is in stowed position **344.**

In these examples, elevation angle **334,** azimuth angle **336,** and constant elevation angle **338** may be measured in radians. In other illustrative examples, elevation angle **334,** azimuth angle **336,** and constant elevation angle **338** may be measured in degrees. In these depicted examples, position **332,** along with boom length **330,** may be identified using number of sensors **322.**

Number of sensors **322** may include, for example, without limitation, air data system **333,** inertial measurement unit **335,** position sensor system **337,** force sensor **339,** and/or other suitable sensors. Air data system **333** may be used to measure dynamic pressure **343** for tanker aircraft **301.** Inertial measurement unit **335** may identify accelerations and rates in three axes for refueling boom **316.** Force sensor **339** may be used to identify forces **381** on refueling boom **316.**

Position sensor system **337** may be used to identify position **332.** Further, position sensor system **337** also may be used to identify length **331** for extension **328** of refueling boom **316.** Position sensor system **337** may be implemented using position sensors in the form of, for example, without limitation, a potentiometer or some other suitable position sensor. Position sensor system **337** may be one or more position sensors.

In these illustrative examples, position **332** may be further controlled using cable system **320** for refueling boom unit **304.** In these illustrative examples, cable system **320** may include, for example, without limitation, hoist cable **340,** cable storage device **341,** and hoist unit **342.** Hoist cable **340** may be used to raise and/or lower refueling boom **316** between stowed position **344** and deployed position **346** for refueling boom **316**. Further, hoist cable **340** may provide support for refueling boom **316** in deployed position **346**.

Hoist cable **340** may be stored in cable storage device **341** in fuselage **319** of tanker aircraft **301**. In these depicted examples, cable storage device **341** may take the form of a spool, a reel, a drum, or some other suitable type of cable storage system.

Hoist unit **342** may be used to deploy hoist cable **340** from cable storage device **341** and/or retract hoist cable **340** into cable storage device **341**. In this manner, hoist cable **340** may be used in moving refueling boom **316** between stowed position **344** and deployed position **346**. For example, without limitation, hoist cable **340** may be deployed from cable storage device **341** to lower refueling boom **316** and retracted into cable storage device **341** to raise refueling boom **316**.

In these illustrative examples, hoist unit **342** may take the form of actuator unit **345**. Actuator unit **345** may include electromechanical actuator **347** in these illustrative examples. Actuator unit **345** may be configured such that hoist cable **340** may not be deployed from cable storage device **341** at undesired times.

In these illustrative examples, hoist cable **340** may be attached to refueling boom **316** at first attachment point **348**. Further, hoist cable **340** may exit fuselage **319** of tanker aircraft **301** at location **350**. Location **350** may be a location of hoist unit **342** in fuselage **319** in some illustrative examples. In these depicted examples, hoist cable **340** may have current length **352**. Current length **352** may be from location **350** to first attachment point **348** on refueling boom **316**. In other advantageous embodiments, current length **352** may be from cable storage device **341** to first attachment point **348**. Current length **352** for hoist cable **340** may be controlled using refueling control system **306**.

In these illustrative examples, refueling control system **306** may have control computer **354**. Control processes **356** may run on control computer **354**. Control processes **356** may include control laws **357**. Control laws **357** may be examples of processes that may run on control computer **354** to control refueling boom unit **304**. Refueling control system **306** may send information back to operator refueling station **302** for display on display **355** in operator refueling station **302**. Operator refueling station **302** also may include control stick **358** to generate operator commands **360**. Operator commands **360** may be sent to refueling control system **306** for processing. Operator commands **360** may include a command to move refueling boom **316** to position **332**.

In these depicted examples, control processes **356** may include processes for controlling cable system **320** of refueling boom **316**. For example, without limitation, control processes **356** may include length identification process **362** and command generation process **364**. Length identification process **362** may receive information from position sensor system **337**. This information may be used to identify desired length **366** for current length **352** of hoist cable **340**.

Desired length **366**, in these examples, may be a length for hoist cable **340** from location **350** to first attachment point **348**. In other illustrative examples, desired length **366** may be a length for hoist cable **340** from cable storage device **341** to first attachment point **348**. Desired length **366** may be identified using position **332** and distance **367**.

Distance **367** may be calculated as the distance between location **350**, where hoist cable **340** exits fuselage **319**, and first attachment point **348**. Further, in these illustrative examples, distance **367** may be calculated using elevation angle **334**, azimuth angle **336**, constant elevation angle **338**, and measured distance **371**. Measured distance **371** may be the distance between first attachment point **348** and second attachment point **379**. In these examples, measured distance **371** may also be the distance between second attachment point **379** and location **350**.

Further, in some illustrative examples, desired length **366** may comprise a length for hoist cable **340** based on position **332**, distance **367**, and additional length **368**. Additional length **368** may be an additional amount of hoist cable **340** that allows refueling boom **316** to have the capability to move during flight.

In these depicted examples, command generation process **364** may use desired length **366** to generate command **370** in commands **314**. Command **370** may control hoist unit **342** such that hoist cable **340** is deployed, retracted, or a combination of the two to change current length **352**. Current length **352** may be changed to provide desired length **366** for hoist cable **340**.

The illustration of refueling environment **300** is not meant to imply physical or architectural limitations to the manner in which different refueling environments may be implemented. For example, other components in addition to or in place of the ones illustrated may be used. Also, in some advantageous embodiments, fewer components than those illustrated for refueling environment **300** may be used.

As one example, in some advantageous embodiments, operator refueling station **302** and refueling control system **306** may be integrated as a single component or system. In yet other advantageous embodiments, a number of additional refueling boom units may be deployed in addition to refueling boom unit **304**.

In some advantageous embodiments, at least a portion of hoist unit **342** may be associated with cable storage device **341**. In other words, at least a portion of actuator unit **345** may be attached to or part of cable storage device **341**.

In other advantageous embodiments, actuator unit **345** may include hydraulic actuator **372** in the place of or in addition to electromechanical actuator **347**. In still other advantageous embodiments, cable system **320** may include number of pulley systems **374** for use in deploying and retracting hoist cable **340**. In some advantageous embodiments, number of pulley systems **374** may be used in the place of cable storage device **341** for storing hoist cable **340**. In these advantageous embodiments, actuator unit **345** may be operated to deploy and retract hoist cable **340** from and to number of pulley systems **374.**

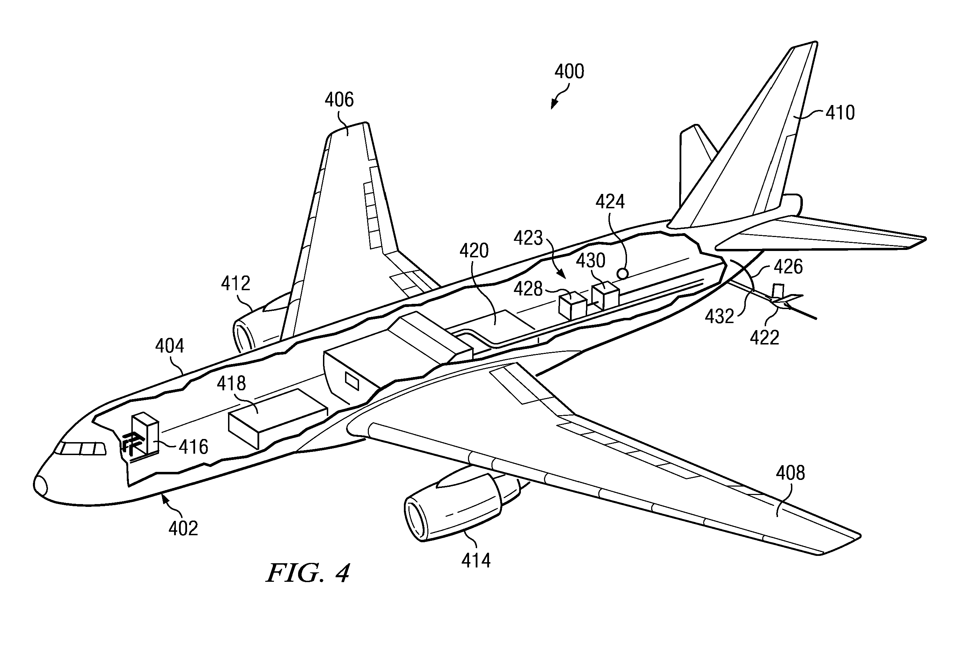

With reference now to **Figure 4,** an illustration of one implementation for a refueling environment is depicted in accordance with an advantageous embodiment. In this example, refueling environment **400** is an example of one implementation for refueling environment **300** in **Figure 3.**

In this illustrative example, tanker aircraft **402** is shown in an exposed view. Tanker aircraft **402** may have fuselage **404,** wing **406,** wing **408,** tail **410,** engine **412,** and engine **414.** In this example, tanker aircraft **402** may contain operator refueling station **416,** auxiliary fuel tank **418,** auxiliary fuel tank **420,** refueling boom **422,** and hoist cable system **423.** In the different advantageous embodiments, an operator at operator refueling station **416** may control refueling boom **422** to perform refueling operations.

Refueling control system **424** may generate commands to control refueling boom **422** in response to operator commands generated by an operator at operator refueling station **416.** The different operations that refueling control system **424** may command include, for example, without limitation, movement of refueling boom **422.**

Hoist cable system **423** may be an example of one implementation for cable system **320** in **Figure 3.** As depicted, hoist cable system **423** may include hoist cable **426,** storage device **428,** and hoist unit **430.** Hoist cable **426** may be attached to refueling boom **422** at first attachment point **432.** Refueling boom **422** may be attached to fuselage **404** at second attachment point **434.**

In this illustrative example, a portion of hoist unit **430** may be associated with storage device **428.** Refueling control system **424** may control hoist cable **426** associated with refueling boom **422.** In particular, refueling control system **424** may control the length of hoist cable **426** deployed from storage device **428.** As depicted, hoist cable **426** may exit fuselage **404** at hoist unit **430.**

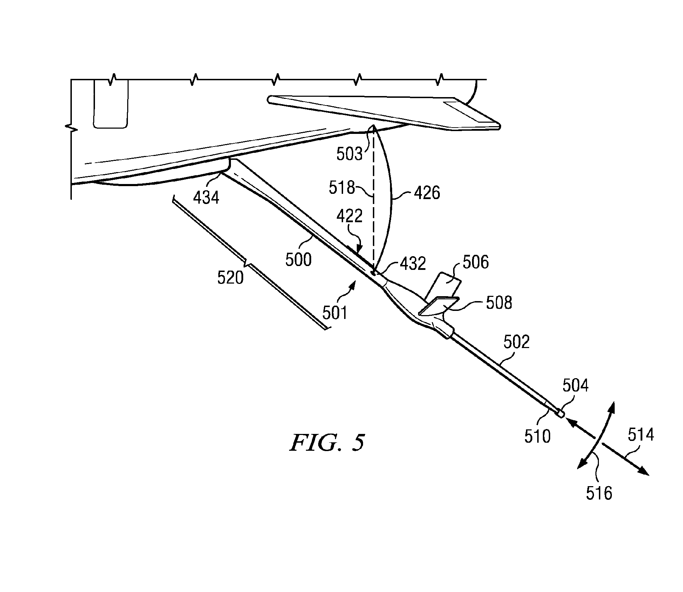

With reference now to **Figure 5,** a more detailed illustration of a refueling boom is depicted in accordance with an advantageous embodiment. In this illustrative example, a more detailed view of refueling boom **422** is illustrated. Refueling boom **422** may be in deployed position **501** with hoist cable **426** attached to refueling boom **422** at attachment point **432.** Further, hoist cable **426** may exit fuselage at location **503.**

Refueling boom **422** may include fixed tube **500,** telescoping tube **502,** nozzle **504,** ruddevator **506,** ruddevator **508,** and strain sleeve **510.** Telescoping tube **502** may extend or retract along the direction of arrow **514.** Refueling boom **422** also may move in the direction of arrow **516.** The movement of refueling boom **422** along the direction of arrow **514** and along the direction of arrow **516** may be controlled using ruddevators **506** and **508.** In these examples, ruddevators **506** and **508** may be examples of ruddevators **329** for positioning system **327** in **Figure 3.**

As depicted in this example, distance **518** may be calculated between location **503** and attachment point **432.** Distance **518** may be calculated using measured distance **520.** Measured distance **520** may be between attachment point **432** and attachment point **434.**

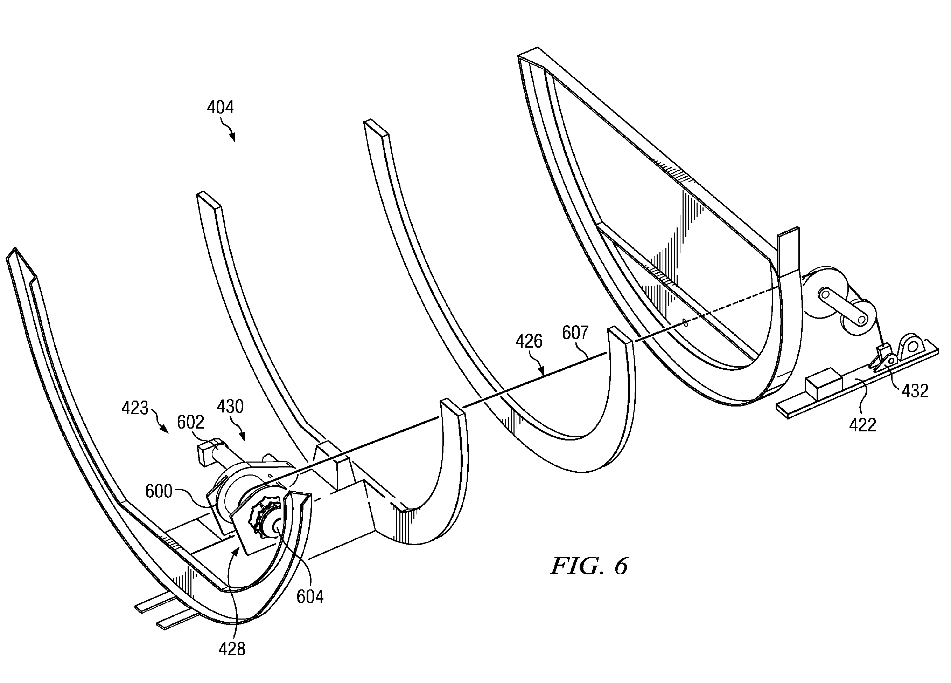

With reference now to **Figure 6,** an illustration of a hoist cable system is depicted in accordance with an advantageous embodiment. In this illustrative example, hoist cable system **423** for refueling boom **422** is depicted. As depicted, hoist cable system **423** may be depicted inside an exposed view of fuselage **404** of tanker aircraft **402** in **Figure 4.**

In this illustrative example, storage device **428** may take the form of drum **600.** Hoist unit **430** may take the form of actuator unit **602.** As depicted, actuator unit **602** may include electromechanical actuator **604.** In other advantageous embodiments, actuator unit **602** may include a hydraulic actuator, such as hydraulic actuator **372** in **Figure 3.** Electromechanical actuator **604** may be connected to drum **600** in this depicted example.

Electromechanical actuator **604** may be operated to deploy and retract hoist cable **426.** For example, without limitation, electromechanical actuator **604** may be operated to turn drum **600** to deploy and retract hoist cable **426.** In this manner, electromechanical actuator **604** may be operated to turn drum **600** to change length **607** of hoist cable **426.**

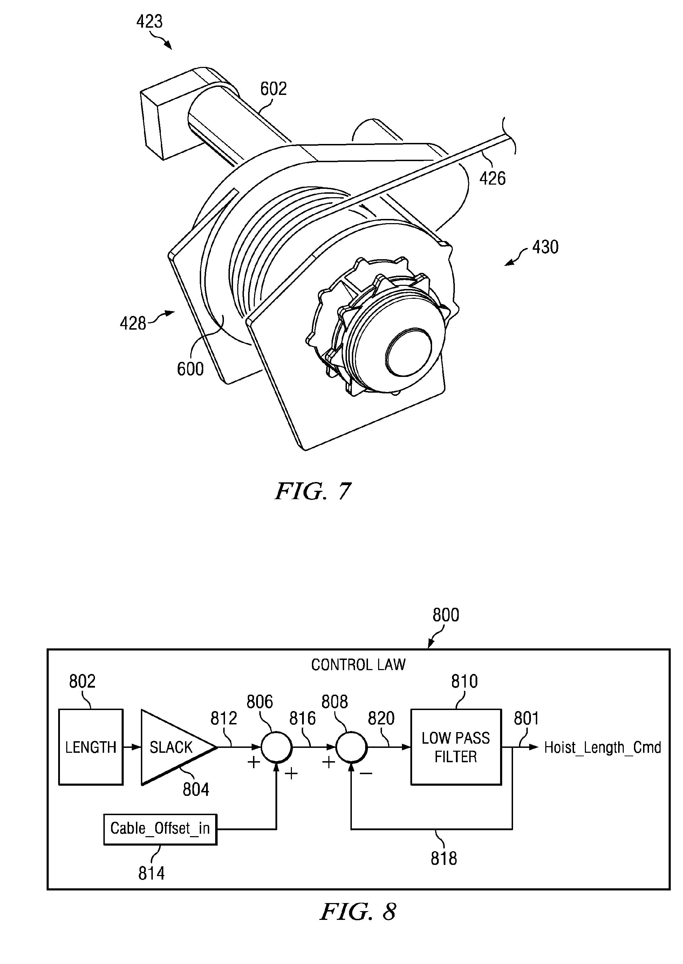

With reference now to **Figure 7,** an illustration of a drum and an actuator unit is depicted in accordance with an advantageous embodiment. A more detailed view of drum **600** and actuator unit **602** in **Figure 6** is depicted in this illustrative example.

With reference now to **Figure 8,** an illustration of a control law for managing a length of a hoist cable is depicted in accordance with an advantageous embodiment. In this illustrative example, control law **800** may be an example of a control law within control laws **357** in **Figure 3.** More specifically, control law **800** may be implemented using length identification process **362** and command generation process **364** in **Figure 3.** In this illustrative example, the signals generated by control law **800** may be digital signals.

Control law **800** may be used to generate command **801.** Command **801** may be generated to control at least one of deploying and retracting hoist cable **340** in **Figure 3,** using, for example, without limitation, electromechanical actuator **347.**

Control law **800** may include distance **802,** multiplier **804,** adder **806,** and second order low pass filter **810.** Distance **802** may be between location **350** where hoist cable **340** exits fuselage **319** of the aircraft and first attachment point **348** for hoist cable **340** on refueling boom **316.** For example, without limitation, distance **802** may be between first attachment point **432** and location **503** in **Figure 5.** In this illustrative example, distance **802** is given by the following equation:

$$distance = D * sqrt(2-2*cos(elev)*cos(azim)*cos(phi)- \qquad 2*sin(phi)*sin(elev))$$

wherein D may be measured distance **371** between second attachment point **379** of refueling boom **316** to fuselage **319** and first attachment point **348** for hoist cable **340** on refueling boom **316,** elev may be elevation angle **334** for refueling boom **316,** azim may be azimuth angle **336** for refueling boom **316,** and phi may be constant elevation angle **338** for refueling boom **316** when refueling boom **316** is in stowed position **344.**

In some illustrative examples, phi may be an elevation angle for refueling boom **316** from a location of hoist unit **342** for hoist cable **340.** In these illustrative examples, D may be measured distance **371** between first attachment point **432** and second attachment point **434** in **Figures 4** and **5.** Further, this measured distance, D, may be substantially equal to the distance between location **503** and second attachment point **434** in **Figure 5.**

Distance **802** may be multiplied by "slack" using multiplier **804** to form adjusted length **812.** In this illustrative example, "slack" may be an example of one implementation for additional length **368** in **Figure 3.** "Slack" may be about 1.10 in these examples and may provide a length for hoist cable **340** that is about 10 percent greater than distance **802.**

In this illustrative example, cable offset **814** may be added to adjusted length **812** using adder **806** to form desired length **816.** Cable offset **814** may have a negative value in these examples. Further, cable offset **814** may take into account a desired length for hoist cable **340** when refueling boom **316** is in stowed position **344.**

As depicted, desired length **816** may be sent into second order low pass filter **810** to generate command **801.** Second order low pass filter **810** may filter desired length **816** to reduce noise in command **801.** This noise may be a portion of the signal for desired length **816** that has a frequency greater than a selected frequency.

Second order low pass filter **810** may also perform limiting operations on desired length **816** using limiter **822** to generate command **801.** Limiter **822** may take into account a total length of hoist cable **340.** For example, without limitation, command **801** may be generated to deploy hoist cable **340** based on the total length of hoist cable **340** available for deploying. In some illustrative examples, limiter **822** may also limit desired length **816** with respect to the operating capabilities of actuator unit **345.** These operating capabilities may include, for example, without limitation, an acceleration and a rate of turning for electromechanical actuator **347** to turn cable storage device **341** to deploy hoist cable **340.**

In these illustrative examples, limiter **822** may perform these limiting operations in a number of steps. For example, limiter **822** may take into account the total length of hoist cable **340** in one step, the acceleration capabilities for electromechanical actuator **347** in a second step, and the rate of turning capabilities for electromechanical actuator **347** in a third step. In other advantageous embodiments, these limiting operations may be performed by limiter **822** in one step.

Second order low pass filter **810** may generate command **801.** Command **801** may be a command to change current length **352** of hoist cable **340** to substantially desired length **816.** Control law **800** may be used to manage the length of the hoist cable during flight in these examples.

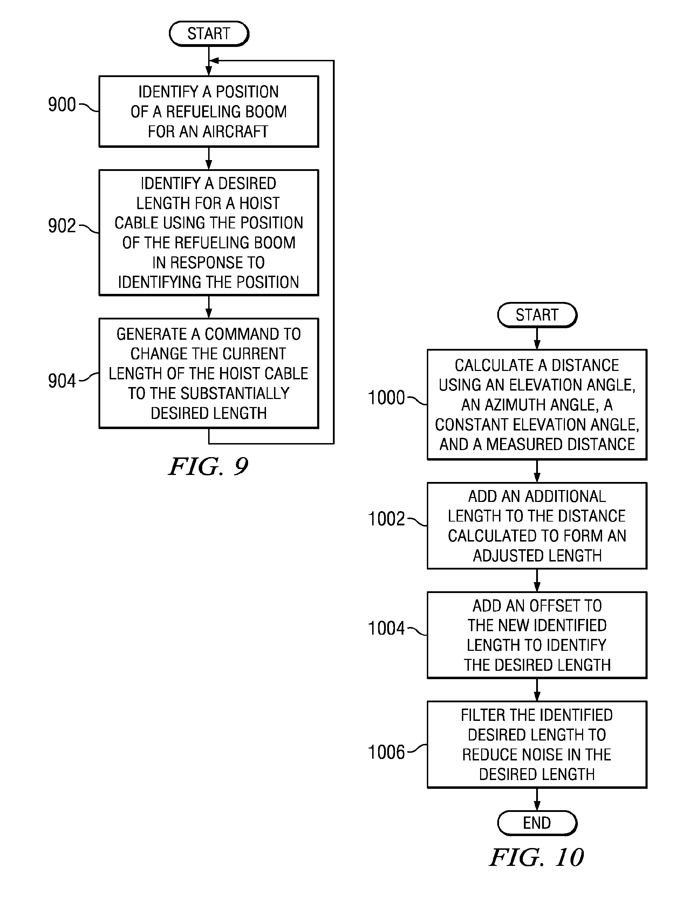

With reference now to **Figure 9,** an illustration of a flowchart of a process for managing a hoist cable for a refueling boom is depicted in accordance with an advantageous embodiment. The process illustrated in **Figure 9** may be implemented using control processes **356** in **Figure 3.** Further, this process may be implemented to manage hoist cable **340** for refueling boom **316** in **Figure 3.**

The process may begin by identifying position **332** of refueling boom **316** (operation **900).** In operation **900,** position **332** may be identified using position sensor system **337** in number of sensors **322.** The process may then identify desired length **366** for hoist cable **340** using position **332** of refueling boom **316** in response to identifying position **332** (operation **902).** In operation **902,** distance **367** may also be used to identify desired length **366.** Desired length **366** may be calculated from location **350** in fuselage **319** to first attachment point **348** on refueling boom **316** in these illustrative examples. In other advantageous embodiments, desired length **366** may be calculated from cable storage device **341** to first attachment point **348** on refueling boom **316.**

The process may generate command **370** to change current length **352** of hoist cable **340** to substantially desired length **366** (operation **904),** with the process then returning to operation **900** as described above. Command **370** may control hoist unit **342** such that hoist cable **340** may be deployed, retracted, or some combination of both to achieve desired length **366** for hoist cable **340.**

The process illustrated in **Figure 9** may be performed substantially continuously. For example, without limitation, in this illustrative example, the process may be performed about 80 times per second. In this manner, desired length **366** may be identified and command **370** generated substantially continuously while refueling boom **316** is in operation.

With reference now to **Figure 10,** an illustration of a flowchart of a process for managing a hoist cable for a refueling boom is depicted in accordance with an advantageous embodiment. The process illustrated in **Figure 10** may be implemented using control processes **356** in **Figure 3** and control law **800** in **Figure 8.** Further, this process may be a more detailed process for operation **902** in **Figure 9.**

The process may begin by calculating a distance for hoist cable **340** using elevation angle **334,** azimuth angle **336,** constant elevation angle **338,** and measured distance **371** (operation **1000**). Measured distance **371** in operation **1000** may be between first attachment point **348** and second attachment point **379.** The process may then add additional length **368** to distance **802** to form an adjusted length (operation **1002**). Additional length **368** may be added to allow refueling boom **316** more movement during flight. The adjusted length may be adjusted length **812** in **Figure 8.**

Thereafter, the process may add an offset to the new identified length to identify desired length **366** (operation **1004**). This offset may be, for example, without limitation, cable offset **814** in **Figure 8.** The process may then filter the identified desired length **366** to reduce noise in desired length **366** (operation **1006**), with the process terminating thereafter. The noise reduced may be portions of the signal for desired length **366** above a selected frequency. The second order low pass filter may be implemented using second order low pass filter **810** in **Figure 8.**

The flowcharts and block diagrams in the different depicted embodiments illustrate the architecture, functionality, and operation of some possible implementations of apparatus and methods in different advantageous embodiments. In this regard, each block in the flowcharts or block diagrams may represent a module, segment, function, and/or a portion of an operation or step. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

For example, without limitation, operation **1004** in **Figure 10** may be performed prior to operation **1002** in **Figure 10.** In other words, the offset may be added prior to adding additional length **368.** In other advantageous embodiments, additional steps in addition to the steps depicted in **Figure 10** may be performed.

Thus, the different advantageous embodiments may provide a method and apparatus for managing a hoist cable for a refueling boom for an aircraft. A position of the refueling boom for the aircraft may be identified. A desired length for the hoist cable may be identified using the position of the refueling boom in response to identifying the position of the refueling boom. Thereafter, a command may be generated to change a current length of the hoist cable to substantially the desired length.

Managing a hoist cable for a refueling boom using a position of a refueling boom may use fewer hardware components, sensors, and/or other components, as compared to managing the hoist cable based on the tension in the hoist cable. Further, using the position of a refueling boom as compared to the tension in the hoist cable allows the hoist cable system to be comprised of electromechanical actuators in place of or in addition to hydraulic actuators. The different advantageous embodiments provide a system for managing the hoist cable that allows the hoist cable to have a substantially constant length at varying airspeeds during flight.

The different advantageous embodiments may take the form of an entirely hardware embodiment, an entirely software embodiment, or an embodiment containing both hardware and software elements. Some embodiments may be implemented in software, which may include, but is not limited to, forms, such as, for example, without limitation, firmware, resident software, and microcode.

Furthermore, the different embodiments may take the form of a computer program product accessible from a computer usable or computer readable medium providing program code for use by or in connection with a computer or any device or system that executes instructions. For the purposes of this disclosure, a computer usable or computer readable medium may generally be any tangible apparatus that can contain, store, communicate, propagate, or transport the program for use by or in connection with the instruction execution system, apparatus, or device.

The computer usable or computer readable medium may be, for example, without limitation, an electronic, magnetic, optical, electromagnetic, infrared, or semiconductor system, or a propagation medium. Non- limiting examples of a computer readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W), and DVD.

Further, a computer usable or computer readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example, without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories, which provide temporary storage of at least some computer readable or computer usable program code to reduce the number of times code may be retrieved from bulk storage during execution of the code.

Input/output or I/O devices may be coupled to the system either directly or through intervening I/O controllers.

These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Non-limiting examples may be modems and network adapters and are just a few of the currently available types of communications adapters.

The description of the different advantageous embodiments has been presented for purposes of illustration and description and it is not intended to be exhaustive or limited to the embodiments in the form disclosed. Many modifications and variations will be apparent to those of ordinary skill in the art. Further, different advantageous embodiments may provide different advantages, as compared to other advantageous embodiments.

The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for managing a hoist cable (340) for a refueling boom (316) for an aircraft (301), the method comprising:

   identifying (900) a position (332) of the refueling boom (316) for the aircraft (301), wherein the step of identifying (900) the position (332) of the refueling boom (316) for the aircraft (301) comprises receiving position information from a number of sensors (322), wherein the number of sensors (322) comprises a position sensor system (337); **characterised by** responsive to identifying the position (332) of the refueling boom (316), identifying (902) a desired length (366) for the hoist cable (340) using the position (332) of the refueling boom (316); and generating (904) a command (370) to change a current length (352) of the hoist cable (340) to substantially the desired length (366).

2. The method of claim 1, wherein the step of identifying (900) the desired length (366) for the hoist cable (340) comprises:

   identifying the desired length (366) using a distance (367) between a location (350) where the hoist cable (340) exits a fuselage (319) of the aircraft (301) and an attachment point (348) for the hoist cable (340) on the refueling boom (316).

3. The method of claim 2, wherein the step of identifying the desired length (366) using the distance (367) between the location (350) where the hoist cable (340) exits the fuselage (319) of the aircraft (301) and the attachment point (348) for the hoist cable (340) on the refueling boom (316) comprises:

   identifying the desired length (366) using the distance (367) between the location (350) where the hoist cable (340) exits the fuselage (319) of the aircraft (301) and the attachment point (348) for the hoist cable (340) on the refueling boom (316) and an additional length (368).

4. The method of claim 2, wherein the attachment point (348) is a first attachment point (348) and wherein the step of identifying the desired length (366) using the distance (367) between the location (350) where the hoist cable (340) exits the fuselage (319) of the aircraft (301) and the attachment point (348) for the hoist cable (340) on the refueling boom (316) comprises:

   identifying the desired length (366) using the distance (367) between the location (350) where the hoist cable (340) exits the fuselage (319) of the aircraft (301) and the first attachment point (348) for the hoist cable (340) on the refueling boom (316) using the following:

$$distance = D * sqrt(\ 2-2*cos(elev)*cos(azim)*cos(phi)-2*sin(phi)*sin(elev)),$$

   wherein D is a measured distance (371) between a second attachment point (379) of the refueling boom (316) to the fuselage (319) and the first attachment point (348) for the hoist cable (340) on the refueling boom (316); sqrt is a square root; elev is an elevation angle (334) for the refueling boom (316); azim is an azimuth angle (336) for the refueling boom (316); and phi is a constant elevation angle (338) for the refueling boom (316) in a stowed position (344).

**5.** The method of claim 1, wherein the desired length (366) of the hoist cable (340) is selected from a group comprising a length of the hoist cable (340) between a location (350) where the hoist cable (340) exits a fuselage (319) of the aircraft (301) and an attachment point (348) for the hoist cable (340) on the refueling boom (316) and the length of the hoist cable (340) between where the hoist cable (340) is fed from a storage (341) inside the fuselage (319) and the attachment point (348) for the hoist cable (340) on the refueling boom (316).

**6.** The method of claim 1, wherein the step of generating (904) the command (370) to change the current length (352) of the hoist cable (340) to substantially the desired length (366) comprises:

filtering (1006) the desired length (366) identified to reduce noise in the command (370) generated to change the current length (352) of the hoist cable (340) to substantially the desired length (366).

**7.** The method of claim 6, wherein the step of filtering (1006) the desired length (366) identified to reduce the noise in the command (370) generated to change the current length (352) of the hoist cable (340) to substantially the desired length (366) comprises:

filtering the desired length (366) identified to reduce the noise in the command (370) generated to change the current length (352) of the hoist cable (340) to substantially the desired length (366) using a second order low pass filter (810).

**8.** The method of claim 1, wherein the step of identifying (900) the position (332) of the refueling boom (316) for the aircraft (301) comprises:

identifying at least one of an elevation angle (334) for the refueling boom (316), an azimuth angle (336) for the refueling boom (316), and a constant elevation angle (338), wherein the constant elevation angle (338) is the elevation angle (334) for the refueling boom (316) in a stowed position (344).

**9.** An apparatus comprising:

a storage device (216);
program code (218) stored on the storage device (216); and a processor unit (204) connected to the storage device (216) and configured to run the program code (218) to identify a position (332) of a refueling boom (316) for an aircraft (301); identify a desired length (366) for a hoist cable (340) in response to identifying the position (332) of the refueling boom (316); and generate a command (370) to change a current length (352) of the hoist cable (340) to substantially the desired length (366).

**10.** The apparatus of claim 9 further comprising:

a number of sensors (322) configured to sense the position (332) of the refueling boom.

**11.** The apparatus of claim 10, wherein the number of sensors (322) is configured to sense at least one of an elevation angle (334), an azimuth angle (336), a constant elevation angle (338), and a boom length (330) for the refueling boom.

**12.** The apparatus of claim 10, wherein the number of sensors (322) comprises at least one of a position sensor system (337), an inertial measurement unit (335), a force sensor (339), and an air data system (333).

**13.** The apparatus of any of claims 9 to 12, wherein the program code (218) is for control laws (357).

**14.** The apparatus of any of claims 9 to 13, further comprising the aircraft (301); and the refueling system (116) comprising the refueling boom (316).

**Patentansprüche**

**1.** Verfahren zum Regeln eines Förderkabels (340) für einen Wiederbetankungsstutzen (316) für ein Flugzeug (301), mit den folgenden Schritten:

Identifizieren (900) einer Position (332) des Wiederbetankungsstutzens (316) für das Flugzeug (301), wobei der Schritt des Identifizierens (900) der Position (332) des Wiederbetankungsstutzens (316) für das Flugzeug (301) das Empfangen von Positionsinformation von einer Anzahl von Sensoren (322) aufweist, wobei die Anzahl von Sensoren (322) ein Positionssensorsystem (337) aufweist;

**gekennzeichnet durch**

Identifizieren (902) einer gewünschten Länge (366) des Förderkabels (340) unter Nutzung der Position (332) des Wiederbetankungsstutzens (316), in Antwort auf ein Identifizieren der Position (332) des Wiederbetankungsstutzens (316);

und

Erzeugen (904) einer Anweisung (370) zum Ändern einer gegenwärtigen Länge (352) des Förderkabels (340) auf im Wesentlichen die gewünschte Länge (366).

2. Verfahren nach Anspruch 1, wobei der Schritt des Identifizierens (900) der gewünschten Länge (366) des Förderkabels (340) Folgendes aufweist:

Identifizieren der gewünschten Länge (366) unter Verwendung einer Entfernung (367) zwischen einem Ort (350), wo das Förderkabel (340) einen Rumpf (319) des Flugzeugs (301) verlässt, und einem Anbringungspunkt (348) für das Förderkabel (340) an dem Wiederbetankungsstutzen (316).

3. Verfahren nach Anspruch 2, wobei der Schritt des Identifizierens der gewünschten Länge (366) unter Nutzung der Entfernung (367) zwischen dem Ort (350), wo das Förderkabel (340) den Rumpf (319) des Flugzeugs (301) verlässt, und dem Anbringungspunkt (348) für das Förderkabel (340) an dem Wiederbetankungsstutzen (316), Folgendes aufweist:

Identifizieren der gewünschten Länge (366) unter Nutzung der Entfernung (367) zwischen dem Ort (350), wo das Förderkabel (340) den Rumpf (319) des Flugzeugs (301) verlässt, und dem Anbringungspunkt (348) für das Förderkabel (340) an dem Wiederbetankungsstutzen (316) und einer zusätzlichen Länge (368).

4. Verfahren nach Anspruch 2, wobei der Anbringungspunkt (348) ein erster Anbringungspunkt (348) ist und wobei der Schritt des Identifizierens der gewünschten Länge (366) unter Nutzung der Entfernung (367) zwischen dem Ort (350), wo das Förderkabel (340) den Rumpf (319) des Flugzeugs (301) verlässt, und dem Anbringungspunkt (348) für das Förderkabel (340) an dem Wiederbetankungsstutzen (316) Folgendes aufweist:

Identifizieren der gewünschten Länge (366) unter Nutzung der Entfernung (367) zwischen dem Ort (350), wo das Förderkabel (340) den Rumpf (319) des Flugzeugs (301) verlässt, und dem ersten Anbringungspunkt (348) für das Förderkabel (340) an dem Wiederbetankungsstutzen (316) unter Nutzung des Folgenden:

$$\text{Entfernung} = D*\text{sqrt} (2-2*\cos(\text{elev})*\cos(\text{azim})*\cos(\text{phi})-2*\sin(\text{phi}*\sin(\text{elev})),$$

wobei D eine gemessene Entfernung (371) zwischen einem zweiten Anbringungspunkt (379) des Wiederbetankungsstutzens (316) an dem Rumpf (319) und dem ersten Anbringungspunkt (348) für das Förderkabel (340) an dem Wiederbetankungsstutzen (316) ist; sqrt ist die Quadratwurzel; elev ist ein Elevationswinkel (334) für den Wiederbetankungsstutzen (316); azim ist ein Azimutwinkel (336) für den Wiederbetankungsstutzen (316); und phi ist ein konstanter Elevationswinkel (338) für den Wiederbetankungsstutzen (316) in einer verstauten Position (344).

5. Verfahren nach Anspruch 1, wobei die gewünschte Länge (366) des Förderkabels (340) aus einer Gruppe bestehend aus einer Länge des Förderkabels (340) zwischen einem Ort (350), wo das Förderkabel (340) einen Rumpf (319) des Flugzeugs (301) verlässt, und einem Anbringungspunkt (348) für das Förderkabel (340) an die Wiederbetankungsstation (316) und der Länge des Förderkabels (340) zwischen wo das Förderkabel (340) aus einer Lagerung (341) innerhalb des Rumpfes (319) zugeführt ist und dem Anbringungspunkt (348) für das Förderkabel (340) an dem Wiederbetankungsstutzen (316) ausgewählt ist.

6. Verfahren nach Anspruch 1, wobei der Schritt des Erzeugens (904) der Anweisung (370) der gegenwärtigen Länge (352) des Förderkabels (340) auf im Wesentlichen die gewünschte Länge (366) Folgendes aufweist:

Filtern (1006) der gewünschten Länge (366), die identifiziert ist, um ein Rauschen in der Anweisung (370), die zum Ändern der gegenwärtigen Länge (352) des Förderkabels (340) auf die im Wesentlichen gewünschte Länge (366) erzeugt wurde, zu reduzieren.

7. Verfahren nach Anspruch 6, wobei der Schritt des Filterns (1006) der gewünschten Länge (366), die identifiziert ist, um das Rauschen in der Anweisung (370), die zum Ändern der gegenwärtigen Länge (352) des Förderkabels (340) auf im Wesentlichen die gewünschte Länge (366), zu reduzieren, Folgendes aufweist:

Filtern der gewünschten Länge (366), die identifiziert ist, um das Rauschen in der Anweisung (370) zu reduzieren, die erzeugt ist, um die gegenwärtige Länge (352) des Förderkabels (340) auf im Wesentlichen die gewünschte Länge (366) zu ändern, unter Nutzung eines Tiefpassfilters zweiter Ordnung (810).

8. Verfahren nach Anspruch 1, wobei der Schritt des Identifizierens (900) der Position (332) des Wiederbetankungsstutzens (316) für das Flugzeug (301) Folgendes aufweist:

Identifizieren von mindestens einem von einem Elevationswinkel (334) für den Wiederbetankungsstutzen (316), einem Azimutwinkel (336) für den Wiederbetankungsstutzen (316) und einem konstanten Elevationswinkel (338), wobei der konstante Elevationswinkel (338) der Elevationswinkel (334) für den Wiederbetankungsstutzen (316) in einer verstauten Position (344) ist.

9. Vorrichtung, mit:

einer Speichereinrichtung (216);
Programmcode (218), der auf der Speichereinrichtung (216) gespeichert ist;
und eine Datenverarbeitungseinheit (204), die mit der Speichereinrichtung (216) verbunden ist und dazu ausgebildet ist, den Programmcode (218) auszuführen, um eine Position (332) eines Wiederbetankungsstutzens (316) für ein Flugzeug (301) zu identifizieren; eine gewünschte Länge (366) für ein Förderkabel (340) in Antwort auf eine Identifikation der Position (332) des Wiederbetankungsstutzens (316) zu identifizieren; und eine Anweisung (370) zu erzeugen, um die gegenwärtige Länge (352) des Förderkabels (340) auf im Wesentlichen die gewünschte Länge (366) zu ändern.

10. Vorrichtung nach Anspruch 9, des Weiteren mit:

einer Anzahl von Sensoren (322), die dazu ausgebildet sind, die Position (332) des Wiederbetankungsstutzens zu erfassen.

11. Vorrichtung nach Anspruch 10, wobei die Anzahl von Sensoren (322) dazu ausgebildet ist, mindestens ein von einem Elevationswinkel (334), einem Azimutwinkel (336), einem konstanten Elevationswinkel (338) und einer Stutzenlänge (330) für den Wiederbetankungsstutzen zu erfassen.

12. Vorrichtung nach Anspruch 10, wobei die Anzahl von Sensoren (322) mindestens eines von einem Positionssensorsystem (337), einer Inertialmesseinheit (335), einem Kraftsensor (339) und einem Luftdatensystem (333) aufweist.

13. Vorrichtung nach einem der Ansprüche 9 bis 12, wobei der Programmcode (218) für Steuervorgaben (357) ist.

14. Vorrichtung nach einem der Ansprüche 9 bis 13, des Weiteren mit dem Flugzeug (301) und dem Wiederbetankungssystem (116) mit dem Wiederbetankungsstutzen (316).

**Revendications**

1. Procédé de gestion d'un câble de levage (340) d'une perche de ravitaillement (316) d'un aéronef (301), le procédé comprenant :

l'identification (900) d'une position (332) de la perche de ravitaillement (316) de l'aéronef (301), dans lequel l'étape d'identification (900) de la position (332) de la perche de ravitaillement (316) de l'aéronef (301) comprend la réception d'informations de position à partir d'un nombre de capteurs (322), le nombre de capteurs (322) comprenant un système de capteurs de position (337) ;

**caractérisé par**, en réponse à l'identification de la position (332) de la perche de ravitaillement (316), l'identification (902) d'une longueur souhaitée (366) du câble de levage (340) en utilisant la position (332) de la perche de ravitaillement (316) ;

et

la génération (904) d'une commande (370) de chargement d'une longueur courante (352) du câble de levage (340) à sensiblement la longueur souhaitée (366).

2. Procédé selon la revendication 1, dans lequel l'étape d'identification (900) de la longueur souhaitée (366) du câble de levage (340) comprend :

l'identification de la longueur souhaitée (366) en utilisant une distance (367) entre une position (350) à laquelle le câble de levage (340) sort d'un fuselage (319) de l'aéronef (301) et un point de fixation (348) du câble de levage (340) sur la perche de ravitaillement (316).

3. Procédé selon la revendication 2, dans lequel l'étape d'identification de la longueur souhaitée (366) en utilisant la distance (367) entre la position (350) à laquelle le câble de levage (340) sort du fuselage (319) de l'aéronef (301) et le point de fixation (348) du câble de levage (340) sur la perche de ravitaillement (316) comprend :

l'identification de la longueur souhaitée (366) en utilisant la distance (367) entre la position (350) à laquelle le câble de levage (340) sort du fuselage (319) de l'aéronef (301) et le point de fixation (348) du câble de levage (340) sur la perche de ravitaillement (316) et une longueur supplémentaire (368).

4. Procédé selon la revendication 2, dans lequel le point de fixation (348) est un premier point de fixation (348) et dans lequel l'étape d'identification de la longueur souhaitée (366) en utilisant la distance (367) entre la position à laquelle le câble de levage (340) sort du fuselage (319) de l'aéronef (301) et le point de fixation (348) du câble de levage (340) sur la perche de ravitaillement (316) comprend :

l'identification de la longueur souhaitée (366) en utilisant la distance (367) entre la position (350) à laquelle le câble de levage (340) sort du fuselage (319) de l'aéronef (301) et le premier point de fixation (348) du câble de levage (340) sur la perche de ravitaillement (316) selon la formule suivante :

$$distance = D*rcar(2-2*cos(elv)*cos(azim)*cos(phi)-2*sin(phi)*sin(élév)),$$

où D est une distance mesurée (371) entre un second point de fixation (379) de la perche de ravitaillement (316) jusqu'au fuselage (319) et le premier point de fixation (348) du câble de levage (340) sur la perche de ravitaillement (316) ; rcar est une racine carrée ; élév est un angle d'élévation (334) de la perche de ravitaillement (316) ; azim est un angle d'azimut (336) de la perche de ravitaillement (316) ; et phi est un angle d'élévation constant (338) de la perche de ravitaillement (316) dans une position arrimée (344).

5. Procédé selon la revendication 1, dans lequel la longueur souhaitée (366) du câble de levage (340) est sélectionnée dans un groupe comprenant une longueur du câble de levage (340) entre une position (350) où le câble de levage (340) sort d'un fuselage (319) de l'aéronef (301) et un point de fixation (348) du câble de levage (340) sur la perche de ravitaillement (316) et la longueur du câble de levage (340) entre l'endroit où le câble de levage (340) est alimenté depuis un point d'arrimage (341) à l'intérieur du fuselage (319) et le point de fixation (348) du câble de levage (340) sur la perche de ravitaillement (316).

6. Procédé selon la revendication 1, dans lequel l'étape de génération (904) de la commande (370) pour changer la longueur courante (352) du câble de levage (340) à sensiblement la longueur souhaitée (366) comprend :

le filtrage (1006) de la longueur souhaitée (366) identifiée pour réduire le bruit dans la commande (370) générée pour changer la longueur courante (352) du câble de levage (340) à sensiblement la longueur souhaitée (366).

7. Procédé selon la revendication 6, dans lequel l'étape de filtrage (1006) de la longueur souhaitée (366) identifiée pour réduire le bruit dans la commande (370) générée pour changer la longueur courante (352) du câble de levage (340) à sensiblement la longueur souhaitée (366) comprend :

le filtrage de la longueur souhaitée (366) identifiée pour réduire le bruit dans la commande (370) générée pour changer la longueur courante (352) du câble de levage (340) à sensiblement la longueur souhaitée (366) en utilisant un filtre passe-bas de second ordre (810).

8. Procédé selon la revendication 1, dans lequel l'étape d'identification (900) de la position (332) de la perche de ravitaillement (316) de l'aéronef (301) comprend :

l'identification d'au moins l'un d'un angle d'élévation (334) de la perche de ravitaillement (316), d'un angle d'azimut (336) de la perche de ravitaillement (316),
et d'un angle d'élévation constante (338), dans lequel l'angle d'élévation constant (338) est l'angle d'élévation (334) de la perche de ravitaillement (316) dans une position arrimée (344).

9. Appareil comprenant :

un dispositif de mémorisation (216) ;
un code de programme (218) mémorisé dans le dispositif de mémorisation (216) ;
et une unité de processeur (204) connectée au dispositif de mémorisation (216) et
configuré pour exécuter le code de programme (218) pour identifier une position (332) d'une perche de ravitaillement (316) d'un aéronef (310) ; identifier une longueur souhaitée (366) d'un câble de levage (340) en réponse à l'identification de la position (332) de la perche de ravitaillement (316) : et générer une commande (370) pour changer une longueur courante (352) du câble de levage (340) à sensiblement la longueur souhaitée (366).

10. Appareil selon la revendication 9, comprenant en outre :

un nombre de capteurs (322) configuré pour détecter la position (332) de la perche de ravitaillement.

11. Appareil selon la revendication 10, dans lequel le nombre de capteurs (322) est configuré pour détecter au moins l'un d'un angle d'élévation (334), d'un angle d'azimut (336), d'un angle d'élévation constant (338), et d'une longueur de perche (330) de la perche de ravitaillement.

12. Appareil selon la revendication 10, dans lequel le nombre de capteurs (322) comprend au moins l'un d'un système de capteurs de position (337), d'une unité de mesure d'inertie (335), d'un capteur de force (339), et d'un système de données aérodynamiques (333).

13. Appareil selon l'une quelconque des revendications 9 à 12, dans lequel le code de programme (218) se rapporte à des lois de guidage (357).

14. Appareil selon l'une quelconque des revendications 9 à 13, comprenant en outre l'aéronef (301) ; et le système de ravitaillement (116) comprend la perche de ravitaillement (316).

## FIG. 1

AIRCRAFT

AIRFRAME
102

INTERIOR
106

100

SYSTEMS

PROPULSION
108

ELECTRICAL
110

HYDRAULIC
112

104

114 — ENVIRONMENTAL

REFUELING — 116

*FIG. 1*

DATA PROCESSING SYSTEM

STORAGE DEVICES

204

216

MEMORY
206

PERSISTENT
STORAGE
208

200

PROCESSOR
UNIT

202

COMMUNICATIONS
UNIT
210

INPUT/OUTPUT
UNIT
212

DISPLAY
214

COMPUTER
PROGRAM PRODUCT
220

COMPUTER READABLE MEDIA

PROGRAM CODE — 218

COMPUTER READABLE
STORAGE MEDIA — 224

COMPUTER READABLE
SIGNAL MEDIA — 226

222

*FIG. 2*

EP 2 528 820 B1

*FIG. 3*

## REFUELING ENVIRONMENT 300

### 301 TANKER AIRCRAFT

**302 OPERATOR REFUELING STATION**

- OPERATOR 310 355
- 312 OPERATOR INPUT
  - OPERATOR COMMANDS
- DISPLAY
- CONTROL STICK 358 360

- 350 LOCATION
- 375 HORIZONTAL PLANE
- 379 SECOND ATTACHMENT POINT
- 380 VERTICAL PLANE

### 314 REFUELING CONTROL SYSTEM 306

- COMMAND — COMMANDS 370

**CONTROL COMPUTER 354**

**CONTROL PROCESSES 356**

- CONTROL LAWS — 357
- LENGTH IDENTIFICATION PROCESS — 362
- COMMAND GENERATION PROCESS — 364
- DESIRED LENGTH — 366
- DISTANCE — 367
- ADDITIONAL LENGTH — 368

319 FUSELAGE 304

REFUELING BOOM UNIT 341 318

**NUMBER OF SENSORS 322**

AIR DATA SYSTEM
DYNAMIC PRESSURE

333 343
335 316

INERTIAL MEASUREMENT UNIT

POSITION SENSOR SYSTEM

337 339

FORCE SENSOR

CABLE SYSTEM 320

340 HOIST CABLE
CURRENT LENGTH

FIRST ATTACHMENT POINT
352
348 374
330

REFUELING BOOM

STOWED POSITION
344 346

DEDPLOYED POSITION

MEASURED DISTANCE
371 346

AXIS

NUMBER OF PULLEY SYSTEMS

**HOIST UNIT 342**

**ACTUATOR UNIT 345**

ELECTROMECHANICAL ACTUATOR 347

HYDRAULIC ACTUATOR 372

CABLE STORAGE DEVICE

ACTUATOR SYSTEM

BOOM LENGTH

FIXED TUBE 323

TELESCOPING TUBE 324

EXTENSION
LENGTH
328 331

325 NOZZLE

326 STRAIN SLEEVE

FORCES 381

POSITIONING SYSTEM 327 329

RUDDEVATORS

POSITION 332

ANGULAR POSITION 369 334

ELEVATION ANGLE

AZIMUTH ANGLE
336 338

CONSTANT ELEVATION ANGLE

351 RECEPTACLE   RECEIVING AIRCRAFT 303

20

FIG. 4

EP 2 528 820 B1

*FIG. 5*

FIG. 6

EP 2 528 820 B1

423

602

426

430

428

600

*FIG. 7*

800

CONTROL LAW

802

810

806    808    820

812    816    801

| LENGTH | SLACK | | LOW PASS FILTER | Hoist_Length_Cmd |

804

Cable_Offset_in

814

818

*FIG. 8*

START

900 — IDENTIFY A POSITION OF A REFUELING BOOM FOR AN AIRCRAFT

902 — IDENTIFY A DESIRED LENGTH FOR A HOIST CABLE USING THE POSITION OF THE REFUELING BOOM IN RESPONSE TO IDENTIFYING THE POSITION

904 — GENERATE A COMMAND TO CHANGE THE CURRENT LENGTH OF THE HOIST CABLE TO THE SUBSTANTIALLY DESIRED LENGTH

*FIG. 9*

START

1000 — CALCULATE A DISTANCE USING AN ELEVATION ANGLE, AN AZIMUTH ANGLE, A CONSTANT ELEVATION ANGLE, AND A MEASURED DISTANCE

1002 — ADD AN ADDITIONAL LENGTH TO THE DISTANCE CALCULATED TO FORM AN ADJUSTED LENGTH

1004 — ADD AN OFFSET TO THE NEW IDENTIFIED LENGTH TO IDENTIFY THE DESIRED LENGTH

1006 — FILTER THE IDENTIFIED DESIRED LENGTH TO REDUCE NOISE IN THE DESIRED LENGTH

END

*FIG. 10*

**EP 2 528 820 B1**